**Europäisches Patentamt**

**European Patent Office**

**Office européen des brevets**

(19)

(11) **EP 0 917 710 B1**

(12) **EUROPEAN PATENT SPECIFICATION**

(45) Date of publication and mention
of the grant of the patent:
**11.02.2004 Bulletin 2004/07**

(51) Int Cl.⁷: $G10L\ 19/12$

(21) Application number: **97937095.4**

(22) Date of filing: **31.07.1997**

(86) International application number:
**PCT/US1997/013594**

(87) International publication number:
**WO 1998/005030 (05.02.1998 Gazette 1998/05)**

(54) **METHOD AND APPARATUS FOR SEARCHING AN EXCITATION CODEBOOK IN A CODE EXCITED LINEAR PREDICTION (CELP) CODER**

VERFAHREN UND VORRICHTUNG ZUM DURCHSUCHEN EINES ERREGUNGSKODEBUCHES BEI EINEM CELP-KODIERER

PROCEDE ET APPAREIL PERMETTANT DE RECHERCHER UNE TABLE DE CODES D'ONDES D'EXCITATION DANS UN CODEUR A PREDICTION LINEAIRE PAR CODES D'ONDES DE SIGNAUX EXCITATEURS EN TRANSMISSION NUMERIQUE DE LA PAROLE

(84) Designated Contracting States:
**AT BE CH DE DK ES FI FR GB GR IE IT LI LU MC NL PT SE**
Designated Extension States:
**AL LT LV RO SI**

(30) Priority: **31.07.1996 US 690709**

(43) Date of publication of application:
**26.05.1999 Bulletin 1999/21**

(73) Proprietor: **QUALCOMM Incorporated
San Diego, California 92121-1714 (US)**

(72) Inventors:
- **DEJACO, Andrew, P.
San Diego, CA 92126 (US)**
- **BI, Ning
San Diego, CA 92126 (US)**

(74) Representative: **Walsh, Michael Joseph et al
TOMKINS & CO.
5, Dartmouth Road
Dublin 6 (IE)**

(56) References cited:
**EP-A- 0 582 921       GB-A- 2 285 204
US-A- 5 444 816       US-A- 5 526 464**

Description

## BACKGROUND OF THE INVENTION

### I. Field of the Invention

The present invention relates to speech processing. More particularly, the present invention relates to a novel and improved method and apparatus for locating an optimal excitation vector in a code excited linear prediction (CELP) coder.

### II. Description of the Related Art

Transmission of voice by digital techniques has become widespread, particularly in long distance and digital radio telephone applications. This in turn has created interest in determining methods which minimize the amount of information sent over the transmission channel while maintaining high quality in the reconstructed speech. If speech is transmitted by simply sampling and digitizing, a data rate on the order of 64 kilobits per second (kbps) is required to achieve a speech quality of conventional analog telephone. However, through the use of speech analysis, followed by the appropriate coding, transmission, and resynthesis at the receiver, a significant reduction in the data rate can be achieved.

Devices which employ techniques to compress voiced speech by extracting parameters that relate to a model of human speech generation are typically called vocoders. Such devices are composed of an encoder, which analyzes the incoming speech to extract the relevant parameters, and a decoder, which resynthesizes the speech using the parameters which it receives over the transmission channel. The model is constantly changing to accurately model the time varying speech signal. Thus, the speech is divided into blocks of time, or analysis frames, during which the parameters are calculated. The parameters are then updated for each new frame.

Of the various classes of speech coders, the Code Excited Linear Predictive Coding (CELP), Stochastic Coding, or Vector Excited Speech Coding coders are of one class. An example of a coding algorithm of this particular class is described in the paper "A 4.8 kbps Code Excited Linear Predictive Coder" by Thomas E. Tremain et al., Proceedings of the Mobile Satellite Conference, 1988. Similarly, examples of other vocoders of this type are detailed in U.S. Patent No. 5,414,796, entitled "Variable Rate Vocoder" and assigned to the assignee of the present invention.

The function of the vocoder is to compress the digitized speech signal into a low bit rate signal by removing all of the natural redundancies inherent in speech. In a CELP coder, redundancies are removed by means of a short term formant (or LPC) filter. Once these redundancies are removed, the resulting residual signal can be modeled as white Gaussian noise, which also must be encoded.

The process of determining the coding parameters for a given frame of speech is as follows. First, the parameters of the LPC filter are determined by finding the filter coefficients which remove the short term redundancy, due to the vocal tract filtering, in the speech. Next, an excitation signal, which is input to LPC filter at the decoder, is chosen by driving the LPC filter with a number of random excitation waveforms in a codebook, and selecting the particular excitation waveform which causes the output of the LPC filter to be the closest approximation to the original speech. Thus, the transmitted parameters relate to (1) the LPC filter and (2) an identification of the codebook excitation vector.

A promising excitation codebook structure is referred to as an algebraic codebook. The actual structure of algebraic codebooks is well known in the art and is described in the paper "Fast CELP coding based on Algebraic Codes" by J.P. Adoul, et al., Proceedings of ICASSP, April 6-9, 1987. The use of algebraic codes is further disclosed in U.S. Patent No. 5,444,816, entitled "Dynamic Codebook for Efficient Speech Coding Based on Algebraic Codes".

## SUMMARY OF THE INVENTION

Analysis by synthesis based CELP coders use a minimum mean square error measure to match the best synthesized speech vector to the target speech vector. This measure is used to search the codevector codebook to choose the optimum vector for the current subframe. This mean square error measure is typically limited to the window over which the excitation codevector is being chosen and thus fails to account for the contribution this codevector will make on the next subframe being searched.

In the present invention, the window size over which the mean square error measure is minimized is extended to account for this ringing of the codevector in the current subframe into the next subframe. The window extension is equal to the length of the impulse response of the perceptual weighting filter, h(n). The mean square error approach in the current invention is analogous to the autocorrelation approach to the minimum mean square error used in LPC analysis as described in the paper "A 4.8kbps Code Excited Linear Predictive Coder" by Thomas E. Tremain et al., Proceedings of the Mobile Satellite Conference, 1988.

Formulating the mean square error problem from this perspective, the present invention has the following advantages over the current approach:

1.) The ringing of the codevector from the current subframe to the next subframe is accounted for in the measure and thus pulses placed at the end of the vector are weighted equivalently to pulses placed at the beginning of the vector.

2.) The impulse response of the perceptual weighting filter becomes stationary for the entire subframe making the autocorrelation matrix of h(n), $\Phi(i,j)$, Toeplitz, or stated another way, $\Phi(i,j) = \Phi|i{-}j|$. Thus the present invention turns a 2-D matrix into a 1-D vector and thus reduces RAM requirements for the codebook search as well as computational operations.

## BRIEF DESCRIPTION OF THE DRAWINGS

The features, objects, and advantages of the present invention will become more apparent from the detailed description set forth below when taken in conjunction with the drawings in which like reference characters identify correspondingly throughout and wherein:

FIG. 1 is an illustration of the traditional apparatus for selecting a code vector in an ACELP coder;
FIG. 2 is a block diagram of the apparatus of the present invention for selecting a code vector in an ACELP coder; and
FIG. 3 is a flowchart describing the method for selecting a code vector in the present invention.

## DETAILED DESCRIPTION OF THE PREFERRED EMBODIMENTS

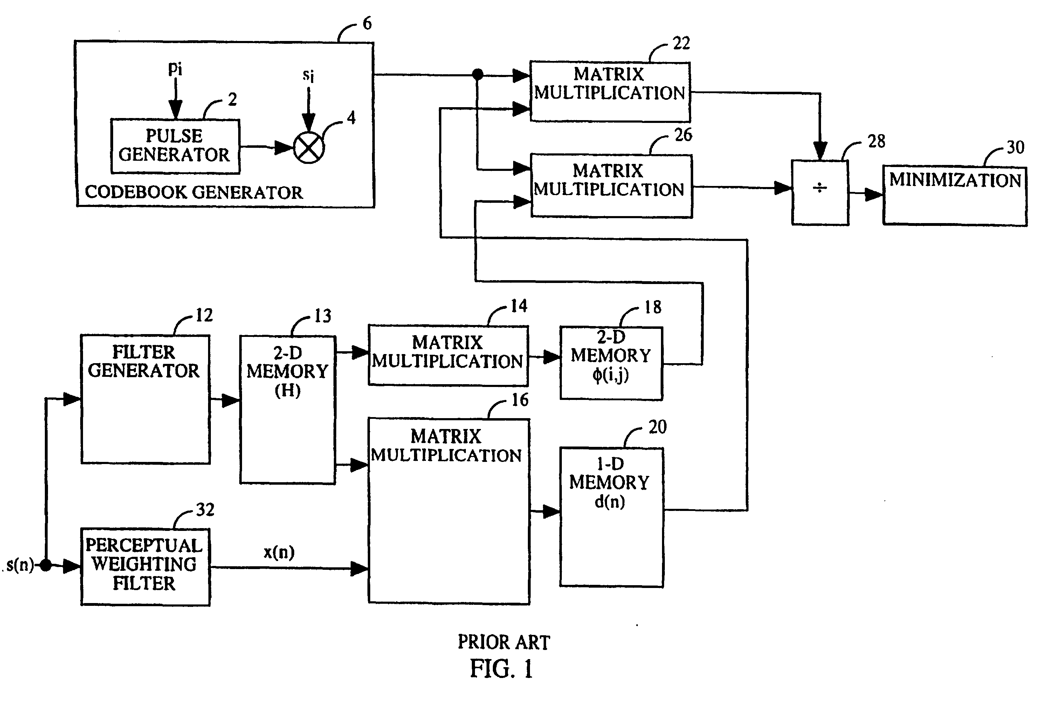

FIG. 1 illustrates the traditional apparatus and method used to perform an algebraic codebook search. Codebook generator 6 includes a pulse generator 2 which in response to a pulse position signal, $p_i$, generates a signal with a unit pulse in the ith position. In the exemplary embodiment, the codebook excitation vector comprises forty samples and the possible positions for the unit impulse are divided into tracks TO to T4 as shown in TABLE 1 below.

TABLE 1

| Track | Positions |
|---|---|
| T0 | 0, 5, 10, 15, 20, 25, 30, 35 |
| T1 | 1, 6,11,16, 21, 26, 31, 36 |
| T2 | 2, 7, 12, 17, 22, 27, 32, 37 |
| T3 | 3, 8, 13, 18, 23, 28, 33, 38 |
| T4 | 4, 9, 10, 19, 24, 29, 34, 39 |

In the exemplary embodiment, one pulse is provided for each track by pulse generator 2. Np is the number of pulses in an excitation vector. In the exemplary embodiment, $N_p$ is 5. For each pulse, $p_i$, a corresponding sign $s_i$ is assigned to the pulse. The sign of the pulse which is illustrated by multiplier 4 which multiplies the unit impulse at position, $p_i$, by the sign value, $s_i$. The resulting code vector, ck, is given by equation (1) below.

$$c_k(j) = \sum_{i=0}^{N_p-1} s_i \cdot \delta(j-p_i) \tag{1}$$

Filter generator 12 generates the tap values for formant filter, h(n), as is well known in the art and described in detail in the aforementioned U.S. Patent No. 5,414,796. Typically, the impulse function, h(n), would be computed for M samples where M is the length of the subframe being searched, for example 40.

The composite filter coefficients, h(n), are provided to and stored as two dimensional triangular Toeplitz matrix (H) in memory element 13 where the diagonal is h(0) and the lower diagonals are h(1)..., h(M-1) as shown below.

$$H = \begin{bmatrix} h(0) & 0 & 0 & \cdots & 0 \\ h(1) & h(0) & 0 & \cdots & 0 \\ h(2) & h(1) & h(0) & \cdots & 0 \\ \vdots & \vdots & \vdots & \ddots & \vdots \\ h(M-1) & h(M-2) & h(M-3) & \cdots & h(0) \end{bmatrix} \tag{2}$$

The values are provided by memory **13** to matrix multiplication element **14**. H is then multiplied by its transpose to give the correlation of the impulse response matrix $\Phi$ in accordance with equation (3) below.

$$\Phi(i,j) = H^t \cdot H = \sum_{n=j}^{M} h(n-i)h(n-j), \ \text{for } i \geq j \tag{3}$$

The result of the correlation operation is then provided to memory element **18** and stored as a two dimensional matrix which requires $40^2$ or 1600 positions of memory for this embodiment.

The input speech frame s(n) is provided to and filtered by perceptual weighting filter **32** to provide the target signal, x(n). The design and implementation of perceptual weighting filter **32** is well known in the art and is described in detail in the aforementioned U.S. Patent No. 5,414,796.

The sample values of the target signal, x(n), and values of the impulse matrix, H(n), are provided to matrix multiplication element 16 which computes the cross correlation between the target signal and the impulse response in accordance with equation (4) below.

$$d(i) = H^t \cdot x = \sum_{j=i}^{M} x(i)h(i-j), \ \text{for } j=0 \text{ to } M. \tag{4}$$

The values from memory element 20, d(i), and the codebook vector amplitude elements, $c_k$, are provided to matrix multiplication element **22** which multiplies the codebook vector amplitude elements by the vector d(n) and squares the resulting value in accordance with equation (5) below.

$$E_{xy}^2 = \left( \sum_{i=0}^{N_p - 1} c_k(p_i) \cdot d(p_i) \right)^2 \tag{5}$$

Codebook vector amplitude elements, $c_k$, and codebook pulse positioning vector p are provided to matrix multiplication element **26**. Matrix multiplication element **26** computes the value, Eyy, in accordance with equation (6) below.

$$E_{yy} = \sum_{j=0}^{N_p - 1} \phi(p_i, p_j) + 2 \cdot \sum_{i=0}^{N_p - 1} \sum_{j=i+1}^{N_p - 1} c_k(p_i) c_k(p_j) \phi(p_i, p_j) \tag{6}$$

The values of Eyy and $(E_{xy})^2$ are provided to divider **28**, which computes the value $T_k$ in accordance with equation (7) below.

$$T_k = \frac{(E_{xy})^2}{E_{yy}} \tag{7}$$

The values $T_k$ for each codebook vector amplitude element, $c_k$, and codebook pulse positioning vector p are provided to minimization element **30** and the codebook vector that maximizes the value $T_k$ is selected.

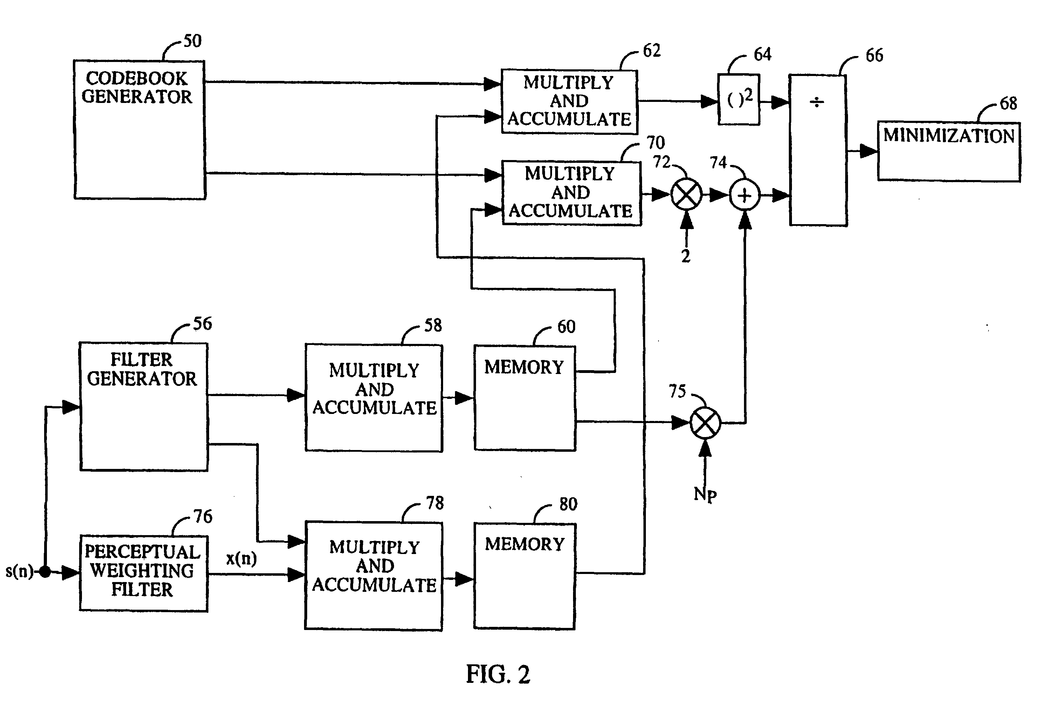

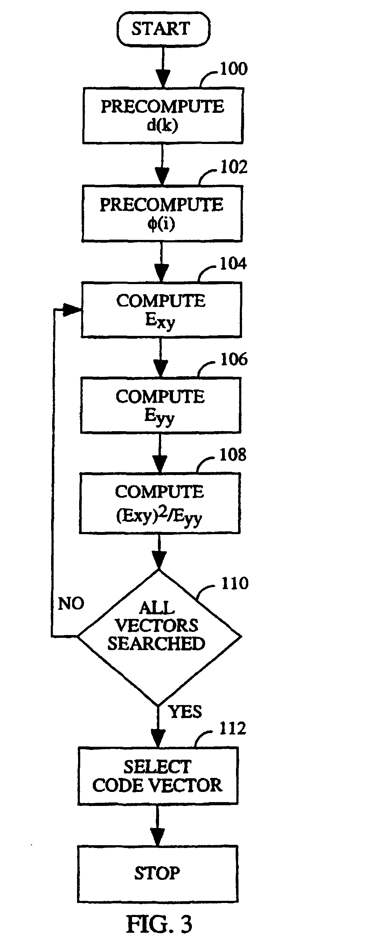

Referring to FIG. 2, the apparatus for selecting the code vector in the present invention is illustrated. In FIG. 3, a flowchart describing the operational flow of the present invention is illustrated. First in block **100**, the present invention precomputes the values of d(k), which can be computed ahead of time and stored since its values do not change with the code vector being searched.

The speech frame, s(n) is provided to perceptual weighting filter **76** which generates the target signal, x(n). The resulting target speech segment, x(n), consists of M+L-1 perceptually weighted samples which are provided to multiply and accumulate element **78**. L is the length of the impulse response of perceptual weighting filter **76**. This extended length target speech vector, x(n), is created by filtering M samples of the speech signal through the perceptual weighting filter **76** and then continuing to let this filter ring out for L-1 additional samples while a zero input vector is applied as input to perceptual weighting filter **76**.

As described previously with respect to filter generator **12**, filter generator **56** computes the filter tap coefficients for the formant filter and from those coefficients determines the impulse response, h(n). However filter generator **56** generates a filter response for delays from 0 to L-1, where L is the length of the impulse response, h(n). It should be noted that though, described in the exemplary embodiment, without a pitch filter the present invention is equally applicable for cases where there is a pitch filter by simple modification of the impulse response as is well known in the art.

The values of h(n) from filter generator **56** are provided to multiply and accumulate element **78**. Multiply and accumulate element **78** computes the cross correlation of the target sequence, x(n), with the filter impulse response, h(n), in accordance with equation (8) below.

$$d(n) = \sum_{j=n}^{n+L-1} x(n)h(n-j), \text{ for } n=0 \text{ to } M-1. \tag{8}$$

The computed values of d(n) are then stored in memory element **80**.

In block **102**, the present invention precomputes the values of $\Phi$ needed for the computation of Eyy. It is at this point where the biggest gain in memory savings of the present invention is realized. Because the mean square error measure has been extended over a larger window, h(n) is now stationary over the entire subframe and consequently the 2-D $\Phi(i,j)$ matrix becomes a 1-D vector because $\Phi(i,j) = \Phi(|i-j|)$. In the present embodiment as described in Table 1, this means that the traditional method requires 1600 Ram locations while the present invention requires only 40. Operation count savings are also obtained in the computation and store of the 1-D vector over the 2-D matrix also. In the present invention, the values of $\Phi$ are computed in accordance with equation (9) below.

$$\Phi(i) = \sum_{n=0}^{L-1} h(n)h(n-i) \tag{9}$$

The values of $\Phi(i)$ are stored in memory element **80**, which only requires L memory locations, as opposed to the traditional method which requires the storage of $M^2$ elements. In this embodiment, L=M.

In block **104**, the present invention computes the cross correlation value $E_{xy}$. The values of d(k) stored in memory element **80** and the current codebook vector ci(k) from codebook generator **50** are provided to multiply and accumulate element 62. Multiply and accumulate element **62** computes the cross correlation of the target vector, x(k), and the codebook vector amplitude elements, ci(k) in accordance with equation (10).

$$E_{xy} = \sum_{k=0}^{N_p} c_i(p_k) \cdot d(p_k) \tag{10}$$

The value of $E_{xy}$ is then provided to squaring means **64** which computes the square of $E_{xy}$.

In block **106**, the present invention computes the value of the autocorrelation of the synthesized speech, $E_{yy}$. The codebook vector amplitude elements $c_i(k)$ and $c_j(k)$ are provided from codebook generator **50** to multiply and accumulate element **70**. In addition, the values of $\Phi|i-j|$ are provided to multiply and accumulate element 70 from memory element 60. Multiply and accumulate element 70 computes the value given in equation (11) below.

$$\sum_{i=0}^{N_p} \sum_{j=i+1}^{N_p} c_k(p_i) \cdot c_k(p_j) \cdot \Phi|p_i - p_j| \qquad (11)$$

The value computed by multiply and accumulate means **70** is provided to multiplier 72 where its value is multiplied by 2. The product from multiplier **72** is provided to a first input of summer **74.**

Memory element **60** provides the value of $\Phi(0)$ to multiplier **75** where it is multiplied by the value $N_p$. The product from multiplier **75** is provided to a second input of summer **74**. The sum from summer **74** is the value Eyy which is given by equation (12) below.

$$E_{yy} = N_p \cdot \Phi(0) + 2 \cdot \sum_{i=0}^{N_p} \sum_{j=i+1}^{N_p} c_k(p_i) \cdot c_k(p_j) \cdot \Phi|p_i - p_j| \qquad (12)$$

An appreciation of the savings of computational resource can be attained by comparing equation (12) of the present invention with equation (6) of the traditional search method. This savings results from faster addressing of a 1-D matrix ($\Phi|pi-pj|$) over a 2-D access of $\Phi(pi,pj)$, from less adds required for Eyy computation (for the exemplary embodiment equation (6) takes 15 adds while equation (12) takes 11 assuming $c_k(pi)$ are just 1 or -1 sign terms), and from the 1360 Ram location savings since $\Phi(i,j)$ does not need to be stored.

In block **108**, the present invention computes the value of $(E_{xy})^2/E_{yy}$. The value of $E_{yy}$ from summing element **74** is provided to a first input of divider **66**. The value of $(Exy)^2$ is provided from squaring means **64** is provided to the second input of divider **66**. Divider **66** then computes the quotient given in equation (**13**) below.

$$\frac{E_{xy}^2}{E_{yy}} \qquad (13)$$

The quotient value from divider **66** is provided to minimization element **66**. In block **110**, if the all vectors $c_k$ have not been tested the flow moves back to block **104** and the next code vector is tested as described above. If all vectors have been tested then, in block **112**, minimization element **68** selects the code vector which results in the maximum value of $(E_{xy})^2/E_{yy}$.

The previous description of the preferred embodiments is provided to enable any person skilled in the art to make or use the present invention. The various modifications to these embodiments will be readily apparent to those skilled in the art, and the generic principles defined herein may be applied to other embodiments without the use of the inventive faculty. Thus, the present invention is not intended to be limited to the embodiments shown herein but is to be accorded a scope consistent with the appended claims.

**Claims**

1. A method for encoding a residual waveform using k codebook vectors ck in a linear prediction coder to provide synthesized speech in which short term and long term redundancies are removed from a frame of N digitized speech samples by a filter means having L taps wherein said filter means has an impulse response, h(n), resulting in said residual waveform of N samples, the said method comprising
    convolving a target signal, x(n), and said impulse response, h(n) to provide a first convolution;
    autocorrelating an impulse response matrix wherein said impulse response matrix is a lower triangular Toeplitz matrix with diagonal h(0) where h(0) is the zeroth impulse response value, where the lower diagonals are h(1),...,h(L-1) and wherein said impulse response autocorrelation is computed in accordance with the equation:

$$\Phi(i) = \sum_{n=0}^{L-1} h(n)h(n-i);$$

autocorrelating said synthesized speech in accordance with said autocorrelation of said impulse response matrix and said codebook vectors, $c_k$ to provide a synthesized speech autocorrelation, $E_{yy}$;

cross correlating said synthesized speech and said target speech in accordance with said first convolution and said codebook vectors to provide a cross correlation $E_{xy}$; and

selecting a codebook vector in accordance with said cross correlation, $E_{xy}$, and said synthesized speech autocorrelation, $E_{yy}$.

2. The method of Claim 1 further comprising the steps of:

generating a first set of filter coefficients;
generating a second set of filter coefficients;
combining said first set of filter coefficients and said second set of filter coefficients to provide said impulse response, h(n).

3. The method of Claim 1 further comprising:

receiving said input frame of N digitized samples; and
perceptual weighting said input frame to provide said target signal.

4. The method of claim 1 wherein said step of convolving said target signal and said impulse response is performed in accordance with the equation:

$$d(n) = \sum_{j=n}^{n+L-1} x(n)h(n-j), \text{ for } n=0 \text{ to } M-1.$$

5. The method of Claim 1 further comprising the step of storing said impulse response autcorrelation in a memory of L memory locations.

6. The method of Claim 1 wherein said step of cross correlating said synthesized speech and said target speech is performed in accordance with the equation:

$$E_{xy} = \sum_{k=0}^{N_p} c_i(p_k) \cdot d(p_k),$$

where d(k) is the cross correlation of the target signal and the impulse response.

7. The method of Claim 1 wherein step of autocorrelating said synthesized speech is performed in accordance with the equation:

$$E_{yy} = N_p \cdot \Phi(0) + 2 \cdot \sum_{i=0}^{N_p} \sum_{j=i+1}^{N_p} c_k(p_i) \cdot c_k(p_j) \cdot \Phi|p_i - p_j|.$$

**8.** The method of Claim 1 wherein said step of selecting a codebook vector comprises the steps of:

for each code vector, $c_k$, squaring the value Exy;
dividing computed value of $E_{yy}$ by said square of $E_{xy}$ for each code vector, $c_k$; and
selecting the code vector which maximizes the quotient of $E_{yy}$ and the square of $E_{xy}$.

**9.** The method of Claim 1 wherein said codebook vectors, $c_k$, are selected in accordance with an algebraic codebook format.

**Patentansprüche**

**1.** Ein Verfahren zum Codieren einer Restwellenform unter Verwendung von K-Codebuchvektoren $c_k$ in einem Codierer mit linearer Vorhersage (linear prediction coder) um synthetisierte Sprache vorzusehen, in der kurzfristige und langfristige Redundanzen aus einem Rahmen von N digitalisierten Sprachsamples entfernt werden, und zwar mittels Filtermitteln mit L Taps bzw. Abgriffen, wobei die Filtermittel eine Impulsantwort h(n) haben, was die erwähnte Restwellenform von N Samples ergibt, wobei das Verfahren Folgendes aufweist:

Falten eines Zielsignals x(n), und der Impulsantwort h(n) um eine erste Faltung vorzusehen;
Autokorrelieren einer Impulsantwortmatrix, wobei die Impulsantwortmatrix eine untere Toeplitz-Dreiecksmatrix mit der Diagonalen h(0) ist, wobei h(0) der nullte Impulsantwortwert ist, und wobei die unteren Diagonalen h(1 ),....,h(L-1 ) sind und wobei die Imputsantwortautokorrefation gemäß der folgenden Gleichung berechnet wird:

$$\Phi_{(l)} = \sum_{n=0}^{L-1} h(n)h(n - i);$$

Autokorrelieren der synthetisierten Sprache gemäß der Autokorrelation der Impulsantwortmatrix und der Codebuchvektoren, $c_k$, um eine synthetisierte Sprachautokorrelation, $E_{yy}$, vorzusehen;
Kreuzkorrelieren der synthetisierten Sprache und der Zielsprache gemäß der ersten Faltung und der Codebuchvektoren um eine Kreuzkorrelation $E_{xy}$ vorzusehen; und
Auswählen eines Codebuchvektors gemäß der Kreuzkorrelation $E_{xy}$ und der synthetisierten Sprachautokorrelation $E_{yy}$.

**2.** Verfahren nach Anspruch 1, das weiterhin die folgenden Schritte aufweist:

Generieren eines ersten Satzes von Filterkoeffizienten;
Generieren eines zweiten Satzes von Filterkoeffizienten;
Kombinieren des ersten Satzes von Filterkoeffizienten und des zweiten Satzes von Filterkoeffizienten um die Impulsantwort h(n) vorzusehen.

**3.** Verfahren nach Anspruch 1, das weiterhin Folgendes aufweist:

Empfangen des Eingaberahmens von N digitalisierten Samples, und perzeptive Gewichtung bzw. Gewichtung der Wahrnehmung des Eingaberahmens um das Zielsignal vorzusehen.

**4.** Verfahren nach Anspruch 1, wobei der Schritt des Faltens des Zielsignals und der Impulsantwort gemäß der folgenden Gleichung ausgeführt wird:

$$d(n) = \sum_{j=n}^{n+L-1} x(n)h(n-j), \text{ für } n=0 \text{ bis } M-1.$$

**5.** Verfahren nach Anspruch 1, das weiterhin den Schritt des Speicherns der Impulsantwortkorrelation in einem Speicher mit L Speicherplätzen aufweist.

**6.** Verfahren nach Anspruch 1, wobei der Schritt des Korrelierens der synthetisierten Sprache und der Zielsprache gemäß der vorliegenden Gleichung ausgeführt wird:

$$E_{xy} = \sum_{k=0}^{N_p} c_i(p_k) \cdot d(p_k),$$

wobei d(k) die Kreuzkorrelation des Zielsignals und der Impulsantwort ist.

**7.** Verfahren nach Anspruch 1, wobei der Schritt des Autokorrelierens der synthetisierten Sprache gemäß der folgenden Gleichung ausgeführt wird:

$$E_{yy} = N_p\, \Phi(0) + 2 \cdot \sum_{i=0}^{N_p} \sum_{j=i+1}^{N_p} c_k(p_i) \cdot c_k(p_j) \cdot \Phi|p_i - p_j|.$$

**8.** Verfahren nach Anspruch 1, wobei der Schritt des Auswählens eines Codebuch-Vektors die folgenden Schritte aufweist:

für jeden Code-Vektor, $c_k$, Quadrieren des Wertes $E_{xy}$;
Dividieren des berechneten Wertes $E_{yy}$ durch das Quadrat von $E_{xy}$ für jeden Codevektor $c_k$ und
Auswählen des Codevektors, der den Quotient von $E_{yy}$ und dem Quadrat von $E_{xy}$ maximiert.

**9.** Verfahren nach Anspruch 1, wobei die Codebuchvektoren $c_k$ gemäß eines algebraischen Codebuchformats ausgewählt werden.

**Revendications**

**1.** Procédé de codage d'une forme d'onde résiduelle utilisant k vecteurs de bibliothèque de codes, $c_k$, dans un codeur à prédiction linéaire pour fournir de la parole synthétisée dans laquelle les redondances à court terme et long terme sont supprimées d'une trame de N échantillons de parole numérisée par un moyen de filtrage à L prises, dans lequel le moyen de filtrage a une réponse impulsionnelle, h(n), d'où il résulte la forme d'onde résiduelle de N échantillons, ce procédé comprenant les étapes suivantes :

convoluer un signal cible, x(n), et la réponse impulsionnelle, h(n), pour fournir une première convolution ;
autocorréler une matrice de réponse impulsionnelle, la matrice de réponse impulsionnelle étant une matrice de Toeplitz triangulaire inférieure de diagonale h(0), où h(0) est la valeur de réponse impulsionnelle d'ordre 0 et où les diagonales inférieures sont h(1) ... h(L-1), l'autocorrélation de réponse impulsionnelle étant calculée par l'équation suivante :

$$\Phi(i) = \sum_{n=0}^{L-1} h(n)h(n-i) \quad ;$$

autocorréler la parole synthétisée en accord avec l'autocorrélation de la matrice de réponse impulsionnelle et des vecteurs de bibliothèque de codes, $c_k$, pour fournir une autocorrélation de parole synthétisée, $E_{yy}$ ; intercorréler la parole synthétisée et la parole cible selon une première convolution et les vecteurs de bibliothèque de codes pour fournir une intercorrélation, $E_{xy}$ ; et sélectionner un vecteur de bibliothèque de codes selon ladite intercorrélation, $E_{xy}$, et ladite autocorrélation de parole synthétisée, $E_{yy}$.

2. Procédé selon la revendication 1, comprenant en outre les étapes suivantes :

produire un premier ensemble de coefficients de filtrage ;
produire un second ensemble de coefficients de filtrage ;
combiner le premier ensemble de coefficients de filtrage et le second ensemble de coefficients de filtrage pour fournir la réponse impulsionnelle, h(n).

3. Procédé selon la revendication 1, comprenant en outre les étapes suivantes :

recevoir la trame d'entrée de N échantillons numérisés, et
pondérer perceptuellement la trame d'entrée pour fournir le signal cible.

4. Procédé selon la revendication 1, dans lequel l'étape de convolution du signal cible et de la réponse impulsionnelle est réalisée selon l'équation suivante :

$$d(n) = \sum_{j=n}^{n+L-1} x(n)h(n-j), \text{ pour } n = 0 \text{ à } M-1 \ .$$

5. Procédé selon la revendication 1, comprenant en outre l'étape consistant à mémoriser l'autocorrélation de réponse impulsionnelle dans une mémoire à L emplacements mémoire.

6. Procédé selon la revendication 1, dans lequel l'étape d'intercorrélation de la parole synthétisée et de la parole cible est réalisée selon l'équation :

$$E_{xy} = \sum_{k=0}^{N_p} c_i(P_k)d(P_k) \ ,$$

où d(k) est l'intercorrélation du signal cible et de la réponse impulsionnelle.

7. Procédé selon la revendication 1, dans lequel l'étape d'autocorrélation de la parole synthétisée est réalisée selon l'équation :

$$E_{yy} = N_p.\Phi(0) + 2.\sum_{i=0}^{N_p} \sum_{j=i+1}^{N_p} c_k(P_i).c_k(P_j).\Phi \left| P_i - P_j \right|.$$

8. Procédé selon la revendication 1, dans lequel l'étape de sélection d'un vecteur de bibliothèque de codes comprend les étapes suivantes :

pour chaque vecteur de code, $c_k$, élever au carré la valeur $E_{xy}$ ;
diviser la valeur calculée de $E_{yy}$ par le carré de $E_{xy}$ pour chaque vecteur de code, $c_k$ ; et
sélectionner le vecteur de code qui rend maximum le quotient de $E_{yy}$ par le carré de $E_{xy}$.

9. Procédé selon la revendication 1, dans lequel les vecteurs de bibliothèque de codes, $c_k$, sont sélectionnés selon un format de bibliothèque de codes algébrique.

EP 0 917 710 B1

CODEBOOK GENERATOR

PULSE GENERATOR

MATRIX MULTIPLICATION

MATRIX MULTIPLICATION

÷

MINIMIZATION

FILTER GENERATOR

2-D MEMORY (H)

MATRIX MULTIPLICATION

2-D MEMORY $\phi(i,j)$

MATRIX MULTIPLICATION

1-D MEMORY $d(n)$

PERCEPTUAL WEIGHTING FILTER

$p_i$

$s_i$

$s(n)$

$x(n)$

PRIOR ART

FIG. 1

FIG. 2

EP 0 917 710 B1

START

PRECOMPUTE
d(k) — 100

PRECOMPUTE
$\phi(i)$ — 102

COMPUTE
$E_{xy}$ — 104

COMPUTE
$E_{yy}$ — 106

COMPUTE
$(Exy)^2/E_{yy}$ — 108

ALL
VECTORS
SEARCHED — 110

NO

YES

SELECT
CODE VECTOR — 112

STOP

FIG. 3